# EUROPEAN PATENT SPECIFICATION

(11) **EP 0 389 873 B1**
(45) Date of publication and mention of the grant of the patent: **03.08.1994**
(21) Application number: 90104915.5
(22) Date of filing: 15.03.1990
(51) Int. Cl.: B60J 1/17, E05F 11/38

(54) **Window regulator apparatus**
Fensterstellmechanismus
Mécanique de réglage de fenêtre

(30) Priority: 29.03.1989 JP 35805/89 U
(43) Date of publication of application: 03.10.1990
(73) Proprietor: AISIN SEIKI KABUSHIKI KAISHA, Kariya City Aichi Pref. (JP)
(72) Inventor: Kuki, Nobuyuki, Toyohashi city (JP); Isomura, Yukio, Chiryu City (JP); Suzumura, Hirokazu, Toyota-city (JP); Sakakibara, Yoshikazu, Anjo city (JP); Ishihara, Hiroshi, Kariya city (JP)
(74) Representative: Tiedtke, Harro, Dipl.-Ing.

(56) References cited:
- DE-A- 2 836 032
- DE-A- 3 416 103
- JP-U-62 000 671
- US-A- 4 706 412

## Description

### BACKGROUND OF THE INVENTION

### Field of the Invention

This invention relates generally to a window regulator apparatus, and more particularly to a window regulator apparatus of a wire type.

Generally, a window regulator apparatus of a wire type as a prior art is known, for example, by Japanese Utility Model Laid-Open No. 62(1987) - 671. This window regulator comprises a door, a window glass up- and downwardly movably supported on the door, a guide rail fixed in the door and rotatably supporting pulleys at upper and lower portions thereof, a driving mechanism laterally fixed between the pulleys in the door, a wire hung between the pulleys and the driving mechanism, a bracket fixedly connected to the window glass and connected to the wire, and a roller fixed to the bracket and slidably provided on the guide rail, thereby moving the wire by actuating the driving mechanism and up- and downwardly moving the window glass through the roller and bracket. A further window regulator apparatus of said wire type is known from DE-A-2 836 032.

However, rattling of the window glass in the longitudinal and width directions of the door is restricted by reducing a clearance between the roller and guide rail as much as possible in the above mentioned prior art. Therefore, it is very difficult to control the above clearance, and if the clearance is reduced, rattling of the window glass can be limited, however, the roller is interfered with the guide rail, thereby generating noise and poor condition upon operation such like heavy operation. In case that the clearance is enlarged, the poor condition upon operation generated by interference between the roller and window glass can be improved, however, rattling of the window glass is increased.

### SUMMARY OF THE INVENTION

One of the objects of the present invention is to provide an improved window regulator apparatus that overcomes the foregoing disadvantages of the prior art.

Another object of the present invention is to provide an improved window regulator apparatus, wherein shoe means is interposed between a guide rail and bracket via resilient means, whereby it is prevented from the generation of poor condition upon operation and rattling of a window glass is eliminated.

To accomplish these and other objects, the window regulator apparatus according to the present invention is provided with shoe means interposed between a guide rail and bracket for absorbing rattling of longitudinal and width directions of a door via resilient means.

### BRIEF DESCRIPTION OF THE DRAWINGS

Various other objects, features and advantages of the present invention will be more fully appreciated as the present invention becomes better understood from the following detailed description when considered in connection with accompanying drawings, wherein
- Fig. 1: shows a plain view of a window regulator apparatus according to the present invention;
- Fig. 2,3: are sectional views showing a main portion of Fig. 1; and
- Fig. 4: is a view similar to Fig. 1, however, showing a shoe.

### DETAILED DESCRIPTION OF THE PREFERRED EMBODIMENT

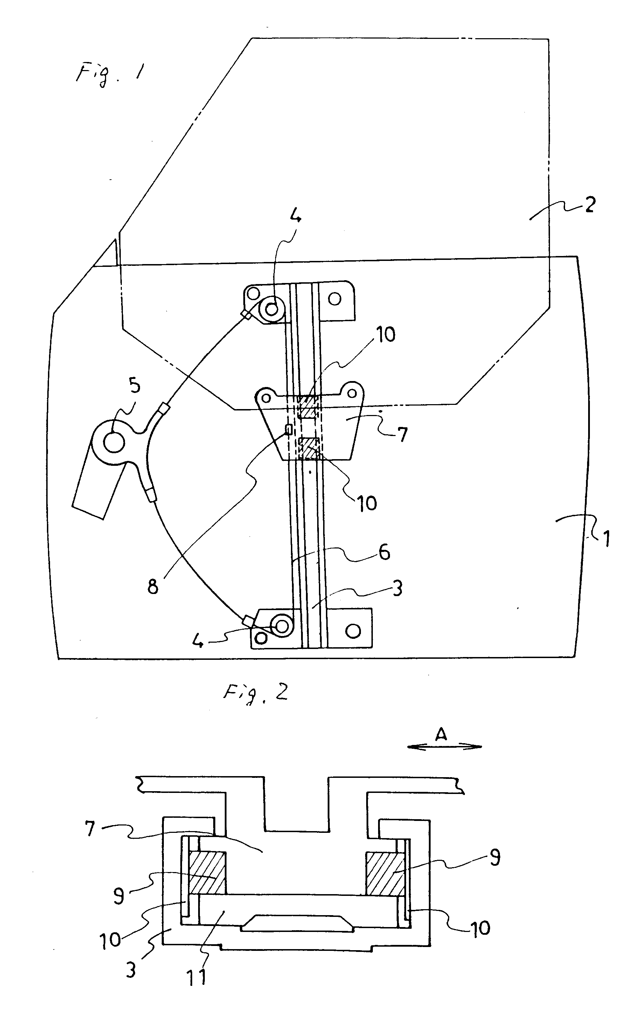

Referring to Fig. 1, a window glass 2 is up- and downwardly movably disposed in a door 1. A guide rail 3 is fixedly connected in the door 1 thereto. Pulleys 4,4 are rotatably mounted on upper and lower portions of the guide rail 3. A driving mechanism 5 is laterally located between pulleys 4,4 and is fixed to the door 1. A wire 6 is hung on pulleys 4,4 and driving mechanism 5 in a triangular shape. A bracket 7 is fixed to a lower portion of the window glass 2 and is fixed to the wire 6 through a hook 8.

When the driving mechanism 5 is actuated in the window regulator apparatus according to the above mentioned construction, the wire 6 and the window glass 2 is up- and downwardly moved along the guide rail 3 through bracket 7 and hook 8.

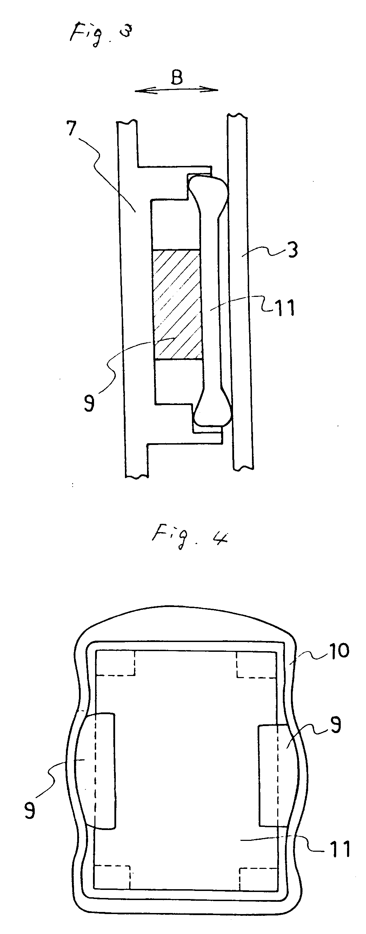

As shown in Figs. 1 to 3, shoes 10,11 are interposed between the guide rail 3 and bracket 7 through resilient means 9. The shoes 10,11 are provided so as to always depress the resilient means 9. Rattling of the bracket 7 into the longitudinal direction of the door 1 (direction A shown in Fig. 2) to the guide rail 3 is absorbed by deflection of the resilient means 9 via the shoe 10, and rattling of the bracket 7 into the width direction of the door 1 (direction B shown in Fig. 3) to the guide rail 3 is absorbed by deflection of the resilient means 9 via the shoe 11.

As above mentioned, rattling of the bracket 7 to the guide rail 3 is absorbed by the resilient means 9, so that rattlings of the window glass 2 into the longitudinal and width directions of the door 1 can be reduced and the bracket 7 and guide rail 3 are not interfered by shoes 10,11. Accordingly, the generation of noise and poor condition upon operation such like heavy operation can be removed.

Further, resilient means 9 and shoes 10,11 are located in a pair into up- and downward directions, so that the rotation around the center of shoes 10,11 can be prevented and the stability of the window glass 2 can be improved.

According to the present invention, the window regulator apparatus includes the door 1, the window glass 2 up- and downwardly movably supported on the door 1, the guide rail 3 fixedly connected to the door 1 and rotatably supporting pulleys 4,4 , the driving mechanism 5 laterally fixed to the door 1 between pulleys 4,4 therewithin, the wire 6 hung on pulleys 4,4 and driving mechanism 5, and the bracket 7 fixed to the window glass 2 and connected to the wire 6. The shoes 10,11 are interposed between the guide rail 3 and bracket 7 through the resilient means 9. Consequently, rattlings of the window glass 2 into the longitudinal and width directions of the door 1 can be reduced and the bracket 7 and guide rail 3 are not interfered by shoes 10,11. As this result, the generation of noise and poor condition upon operation such like heavy operation can be removed.

The principles, preferred embodiments and mode of operation of the present invention have been described in the foregoing application. The invention which is intended to be protected herein should not, however, be construed as limited to the particular forms disclosed, as these are to be regarded as illustrative rather than restrictive.

A window regulator apparatus includes a guide rail fixed within a door, pulleys rotatably supported on the guide rail at upper and lower portions thereof, a driving mechanism fixed within the door for up- and downwardly moving a window glass along the guide rail, a wire hung on the pulleys and driving mechanism for transmitting a moving force to the window glass, a bracket fixedly connected to the wire, resilient means interposed between the rail member and bracket member, and shoe means interposed between the resilient means and guide rail.

## Claims

1. A window regulator apparatus, comprising a guide rail (3) fixed within a door (1), guide means rotatably supported on said guide rail (3) at upper and lower portions thereof, driving means (5) fixed within said door (1) for up- and downwardly moving a window glass (2) along said guide rail (3), a wire member (6) hung on said guide rail (3), and driving means for transmitting a moving force to said window glass (2), a bracket member (7) guided by said guide rail (3) fixedly connected to said window glass (2) and operatively connected to said wire member (6), resilient means (9) interposed between said guide rail (3) and said bracket member (7), **characterized in that** between said resilient means (9) and said guide rail (3) shoe means (10, 11) are interposed, wherein said resilient means (9) and said shoe means (10, 11) are arranged in pairs and move in an upward and downward direction to said guide rail (3).

2. A window regulator apparatus according to claim 1, wherein said resilient means (9) is located between outer lateral surfaces of said bracket member (7) and inner lateral surfaces of said guide rail (3).

3. A window regulator apparatus according to claim 1, wherein said shoe means includes first (10) and second (11) shoes.

4. A window regulator apparatus according to claim 3, wherein said first shoe (10) is located between outer lateral surfaces of said resilient means (9) and inner lateral surfaces of said guide rail (3).

5. A window regulator apparatus according to claim 3, wherein said second shoe (11) is located between front surfaces of said resilient means (9) and an inner surface of said guide rail (3).

## Patentansprüche

1. Ein Fensterstellmechanismus, bestehend aus einer Führungsschiene **(3)**, die innerhalb einer Tür **(1)** montiert ist, Führungsmitteln, die drehbar im oberen und im unteren Abschnitt der Führungsschiene **(3)** angeordnet sind, einem Antriebsmittel **(5)**, das im Innenraum der Tür **(1)** zur Auf- und Abwärtsbewegung einer Fensterscheibe **(2)** entlang der Führungsschiene **(3)** montiert ist, einem Drahtseilteil **(6)**, das auf der Führungsschiene **(3)** eingehängt ist, und dem Antriebsmittel zur Übertragung einer Stellkraft auf die Fensterscheibe **(2)**, einem Schellenteil **(7)**, das von der Führungsschiene **(3)** geführt und an der Fensterscheibe **(2)** montiert sowie mit dem Drahtseilteil **(6)** wirkungsmäßig verbunden ist, dem elastischen Mittel **(9)**, das zwischen der Führungsschiene **(3)** und dem Schellenteil **(7)** eingefügt ist, **dadurch gekennzeichnet**, daß zwischen dem elastischen Mittel **(9)** und der Führungsschiene **(3)** Einsatzmittel **(10, 11)** eingefügt sind, wobei das elastische Mittel **(9)** und die Einsatzmittel **(10, 11)** paarweise angeordnet sind und sich zur Führungsschiene **(3)** auf- und abwärts gerichtet bewegen.

2. Ein Fensterstellmechanismus nach Anspruch 1, wobei das elastische Mittel **(9)** zwischen den äußeren Seitenflächen des Schellenteils **(7)** und den inneren Seitenflächen der Führungsschiene **(3)** angeordnet ist.

3. Ein Fensterstellmechanismus nach Anspruch 1, wobei das Einsatzmittel den ersten **(10)** und den zweiten **(11)** Einsatz einschließt.

4. Ein Fensterstellmechanismus nach Anspruch 3, wobei der erste Einsatz **(10)** zwischen den äußeren Seitenflächen des elastischen Mittels **(9)** und den inneren Seitenflächen der Führungsschiene **(3)** angeordnet ist.

5. Ein Fensterstellmechanismus nach Anspruch 3, wobei der zweite Einsatz **(11)** zwischen den Vorderseiten des elastischen Mittels **(9)** und einer Innenfläche der Führungsschiene **(3)** angeordnet ist.

## Revendications

1. Régulateur de fenêtre, comprenant un rail de guidage (3) fixé dans une porte (1), un moyen de guidage supporté en rotation sur ledit rail de guidage (3) à ses parties supérieure et inférieure, un moyen d'entraînement (5) fixé dans ladite porte (1) pour animer d'un mouvement ascendant et descendant une vitre (2) de fenêtre le long dudit rail de guidage (3), un élément de fil (6) placé sur ledit rail de guidage (3), et un moyen d'entraînement pour transmettre une force motrice à ladite vitre (2) de la fenêtre, un élément de support (7) guidé par ledit rail de guidage (3) relié de façon fixe à ladite vitre (2) de la fenêtre et connecté opérationnellement audit élément de fil (6), un moyen élastique (9) interposé entre ledit rail de guidage (3) et ledit élément de support (7), caractérisé en ce qu'entre ledit moyen élastique (9) et ledit rail de guidage (3) des moyens de patin (10, 11) sont interposés, où ledit moyen élastique (9) et lesdits moyens de patin (10, 11) sont disposés par paires et sont animés d'un mouvement ascendant et descendant dans ledit rail de guidage (3).

2. Régulateur de fenêtre selon la revendication 1, dans lequel ledit moyen élastique (9) est situé entre les surfaces latérales extérieures dudit élément de support (7) et les surfaces latérales intérieures dudit rail de guidage (3).

3. Régulateur de fenêtre selon la revendication 1, dans lequel ledit moyen de patin comprend des premier (10) et second (11) patins.

4. Régulateur de fenêtre selon la revendication 3, dans lequel ledit premier patin (10) est situé entre les surfaces latérales extérieures dudit moyen élastique (9) et les surfaces latérales intérieures dudit rail de guidage (3).

5. Régulateur de fenêtre selon la revendication 3, dans lequel ledit second patin (11) est situé entre les surfaces avant dudit moyen élastique (9) et une surface intérieure dudit rail de guidage (3).
